# EUROPÄISCHE PATENTSCHRIFT

(11) **EP 3 673 725 B1**
(45) Veröffentlichungstag und Bekanntmachung des Hinweises auf die Patenterteilung: **12.02.2025**
(21) Anmeldenummer: 19218551.0
(22) Anmeldetag: 20.12.2019
(51) Int. Cl.: A01G 3/025, A01G 3/037, A01G 3/02

(54) **SCHNEIDVORRICHTUNG**
CUTTING DEVICE
DISPOSITIF DE COUPE

(30) Priorität: 27.12.2018 DE 102018251740
(43) Veröffentlichungstag der Anmeldung: 01.07.2020
(73) Patentinhaber: Robert Bosch GmbH, 70442 Stuttgart (DE)
(72) Erfinder: Zador, Endre, Ipswich, Suffolk IP38DH (GB); Bissell, John, Claydon, Suffolk IP6 0AN (GB); Nagy, Janos, 3443 Meznagymihaly (HU); Harris, Alex, Stowmarket, Suffolk IP142RJ (GB)

(56) Entgegenhaltungen:
- EP-A1- 1 568 266
- EP-B1- 0 421 108
- DE-U1- 202016 100 465
- FR-A1- 2 569 521
- JP-A- 2010 000 129

## Beschreibung

Die vorliegende Erfindung betrifft eine Schneidvorrichtung, insbesondere Gartenschneidvorrichtung, mit zumindest einem ersten und einem zweiten relativ zueinander bewegbaren Schneidelement, mit einem ersten und einem zweiten relativ zueinander bewegbaren Hebelelement, insbesondere Griffelement, zum Öffnen und Schließen der Schneidelemente.

### Stand der Technik

Derartige Schneidvorrichtungen sind beispielsweise als Ast- oder Gartenscheren bekannt. Ein Winkel- bzw. Übersetzungsverhältnis bei einer Bewegung der Hebel- oder Griffelemente relativ zu einer korrespondierenden Bewegung der Schneidelemente beträgt i ≥ 1, bzw. der Öffnungswinkel der Hebelelemente ist größer/gleich dem korrespondierenden Öffnungswinkel der Schneidelemente. Damit kann die typischerweise manuell auf die Hebel- oder Griffelemente ausgeübte Kraft verstärkt werden, so dass auch dicke Äste durchtrennt werden können. Ferner wird auf die Druckschriften JP 2010 000129 A, FR 2 569 521 A1, EP 1 568 266 A1 und EP 0 421 108 B1 verwiesen.

### Offenbarung der Erfindung

Es wird eine Schneidvorrichtung mit den Merkmalen des Anspruchs 1 vorgeschlagen. Vorteilhafte Ausgestaltungen, Varianten und Weiterbildungen der Erfindung sind den Unteransprüchen zu entnehmen.

Die Erfindung geht aus von einer Schneidvorrichtung, insbesondere einer Gartenschneidvorrichtung, mit zumindest einem ersten und einem zweiten relativ zueinander bewegbaren Schneidelement, mit einem ersten und einem zweiten relativ zueinander bewegbaren Hebelelement, insbesondere Griffelement, zum Öffnen und Schließen der Schneidelemente.

Es wird vorgeschlagen, dass eine Verlagerung der Hebelelemente um einen ersten Winkel, eine Verlagerung der Schneidelemente um einen zweiten Winkel bewirkt, wobei der zweite Winkel größer als der erste Winkel ist, insbesondere eineinhalb bis dreimal so groß, bevorzugt doppelt so groß. Die vorgeschlagene Schneidvorrichtung kann beispielsweise im Landschaftsbau und Gartenbau als Gartenschere, Astschere, Rebschere, Hochentaster bzw. eine Garten- oder Astschere an einer insbesondere teleskopierbaren oder längenverstellbaren Verlängerungsvorrichtung, oder dergleichen eingesetzt werden. Bevorzugt ist sie zum Einsatz als Garten- oder Astschere vorgesehen. Sie kann über als Hebelelemente ausgebildete Griffelemente betätigt werden, eine Bewegungsmimik an einem Griffelement, die die Hebelelemente betätigt, oder sie kann auch motorisch, oder semi manuell/motorisch betrieben werden. Die Hebelelemente können dazu auch motorisch und/oder semimotorisch verlagerbar ausgebildet sein. Dadurch, dass eine Verlagerung der Hebelelemente um einen ersten Winkel, eine Verlagerung der Schneidelemente um einen zweiten Winkel bewirkt, wobei der zweite Winkel größer als der erste Winkel ist, wird das Einsatzgebiet der Schneidvorrichtung erweitert und/oder verbessert. Trotz verhältnismäßig kleinem Öffnungswinkel der Hebelelemente, können die Schneidelemente verhältnismäßig weit geöffnet werden. Dadurch lässt sich die Schneidvorrichtungen auch unter beengten Platzverhältnissen umfangreich einsetzten, beispielsweise innerhalb von Büschen oder Bäumen lassen sich auch noch dicke Äste, die einen großen Öffnungswinkel der Schneidelemente erfordern, durchtrennen, obwohl die Hebelelemente, insbesondere die Griffelemente nur bedingt geöffnet werden können, da sie beispielsweise an benachbarte Äste anschlagen. Mit einer Gartenschere, bei der die Öffnung der Griffelemente durch die Handgröße des Nutzers begrenzt ist, kann erfindungsgemäß der Öffnungswinkel vergrößert werden, wodurch auch dicke Äste durchtrennt werden können. Ferner kann die Schließgeschwindigkeit der Schneidelemente bzw. deren Schnittgeschwindigkeit durch die Übersetzung ins Schnelle erhöht werden. Damit kann die Schnittanzahl pro Zeiteinheit erhöht werden.

Es wird ein Getriebe und/oder einen Verbinder vorgeschlagen, das/der eine Bewegung der Hebelelemente relativ zu einer Bewegung der Schneidelemente mit einer Übersetzung i < 1 übersetzt. Damit wird eine Übersetzung ins Schnelle mit den vorgenannten Vorteilen insbesondere Zugänglichkeit, Komfort, Schneidelemente-Öffnungswinkel-Vergrößerung und/oder Schnittgeschwindigkeitssteigerung ermöglicht.

Es wird vorgeschlagen, dass der Verbinder ein Zahnrad ist, wobei das Zahnrad drehbar am zweiten Hebelelement aufgenommen ist und sich einerseits an einem verzahnten Abschnitt des ersten Hebelelements und andererseits an einem verzahnten Abschnitt des zweiten Schneidelements abgestützt, insbesondere kraftübertragend abwälzt. Dadurch wird eine Vorrichtung zur Realisierung der erfindungsgemäßen Öffnungswinkelverhältnisse zwischen Hebelelementen und Schneidelementen, bzw. eine Übersetzung ins Schnelle realisiert. Zudem kann beispielsweise über das Zahnrad eine rotierende Antriebseinheit angekoppelt werden, insbesondere zum teilmanuellen oder vollmotorischen Betrieb der Schneidvorrichtung. Gleichwohl kann die Antriebseinheit auch viele andere Kraftübertragungsarten aufweisen, wie weiter unten erläutert.

Ferner wird eine Schneidvorrichtung vorgeschlagen, aufweisend eine insbesondere motorische Antriebseinheit, die in zumindest einem Betriebszustand dazu vorgesehen ist, eine Bewegung des zweiten Schneidelements relativ zu dem ersten Schneidelement zumindest zu unterstützen. Derartige Mechanismen sind beispielsweise den Anmeldungen DE102015206959A1 oder DE102016211975A1 der Robert Bosch GmbH zu entnehmen. Speziell deren Figurenbeschreibungen sind eine Antriebseinheit, Kupplungseinheit, Rückstelleinheit, Getriebeeinheit, Seilwinde und/oder ein Antriebskraftübertragungselement, insbesondere ein in einer Öffnungsfeder der Griffelemente positioniertes Antriebskraftübertragungselement, insbesondere in Form eines Seils, zu entnehmen. Ergänzend sei Beispielhaft auf die DE102015206959A1 (vgl. insb. Fig. 1, 2, 8-18), DE102016211975A1 (vgl. insb. Fig. 2-5), DE102010016296B4 (vgl. insb. Fig. 1-4), WO2008023117A2 (vgl. insb. Fig. 1, 2a, 2b, 4) verwiesen. Aufbau und Anordnung der dort gezeigten Antriebselemente zum insbesondere semi-manuellen Betrieb von Schneidvorrichtung, sind ebenso anwendbar auf die vorliegende Erfindung und sollen deshalb als Ausführungsformen für mögliche Antriebseinheiten sowie Antriebselemente dieser Anmeldung verstanden werden.

Diese Mechanismen können, insbesondere in Anlehnung an die vorgenannten Veröffentlichungen, an den Hebel- oder Griffelementen der hiesigen Schneidvorrichtung angreifen. Es ist aber auch vorstellbar, dass ein Antriebskraftübertragungselement am Verbinder, am Zahnrad und/oder am Schneidelement angreift. Es kann ein Linearantrieb beispielsweise mit Gestängen, Zugseilen oder Zug-/Druckdrähten, beispielsweise in einer Hülse geführte Zug-/Druckdrähte, sowie andere Zug- und/oder Druckmechanismen zum Öffnen und/oder schließen der Schneid- bzw. Hebelelemente oder dergleichen, Verwendung finden. Die Antriebseinheit kann in oder an zumindest einem Hebelelement oder Griffelelement angeordnet sein.

Ferner kann ein Sensor bzw. eine sensorisch wirkende Einrichtung zur Detektion einer auf das oder die Hebelelemente und/oder das oder die Griffelemente einwirkenden Kraft und/oder einer Kraftschwelle vorgesehen sein, insbesondere Bedien-, Scheid- und/oder Handkraft. Diese(r) kann beispielsweise analog zu den folgenden Anmeldungen vorgesehen sein: DE102016211975A1 (vgl. BZ 40, Fig. 2-3), DE102010016296B4 (vgl. BZ 16, Fig. 1 sowie [0005, 0006, 0009, 0010]), WO2008023117A2 (BZ 13 Fig. 2a, 2b), DE20205106U1 (BZ 26, Fig. 6), FR2462094 (BZ 10, 10' Fig. 1, 2). Es sind ebenso auch andere Sensorelemente zur Erfassung einer Handkraft, eines Verlagerungswegs (Wegesensor) oder dergleichen vorstellbar, z.B. Dehnmessstreifen, Wägezellen oder dergleichen.

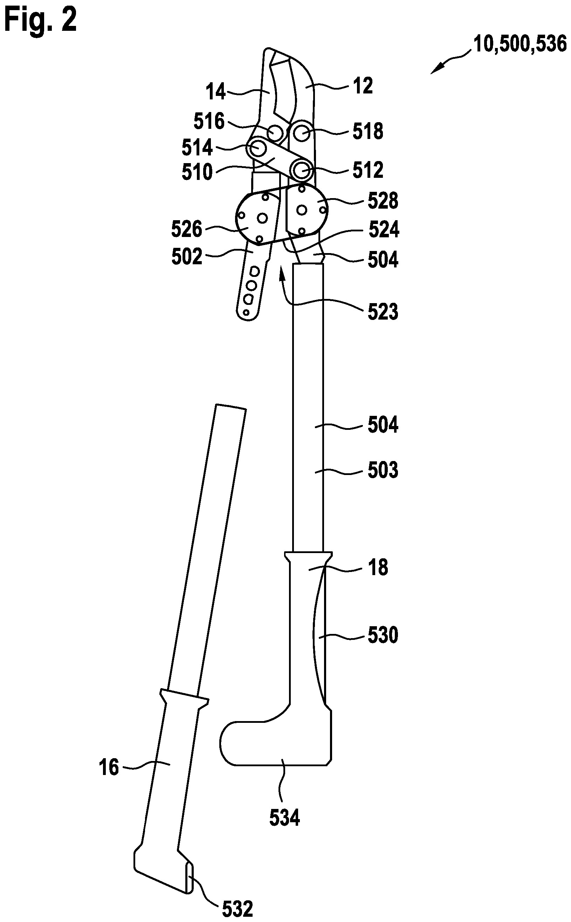

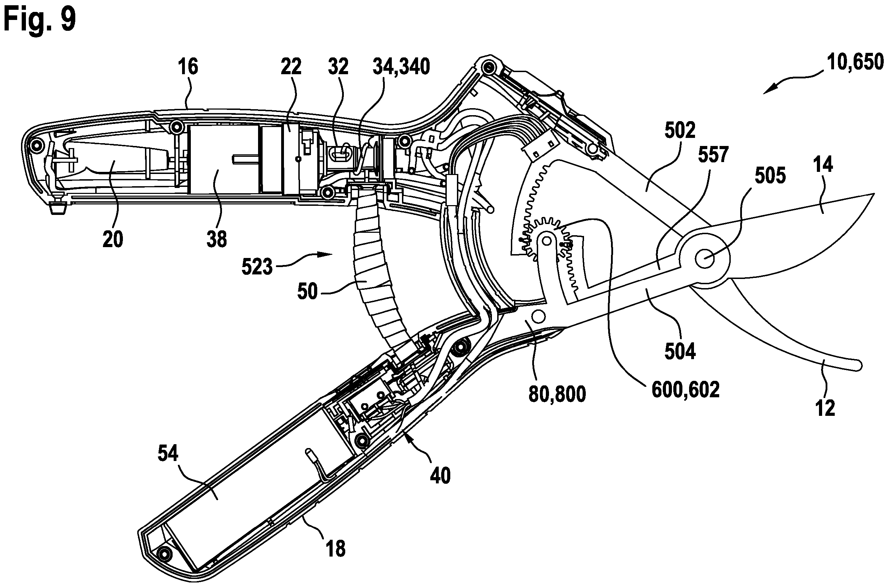

Ein Mechanismus zur Detektion einer Kraftschwelle ab der ein Unterstützungsbetrieb einschaltet, kann beispielsweise der DE102016211975A1 (vgl. BZ 40, Fig. 2-3) entnommen werden. Eine Feder spannt dabei ein Schneidelement gegenüber einem Hebel- bzw. Griffelement vor, wobei Schneidelement und Hebel-/Griffelement geringfügig zueinander verlagerbar sind, insbesondere um einen gemeinsamen Drehpunkt verlagerbar ausgebildet sind. Sofern am Schneidelement eine Schnittkraft wirkt und am Griff- bzw. Hebelelement eine Handkraft wirkt, die nicht zum Durchtrennen des zu schneidenden Gegenstands, aber zur Kompression der Feder ausreicht, wird ab einem gewissen Verlagerungsweg, insbesondere einem einstellbaren Verlagerungsweg, ein Schalter aktiviert, der den Unterstützungsbetrieb bzw. die Antriebseinheit einschaltet. Somit lässt sich mit insbesondere robusten mechanischen Elementen und einfachen elektronischen Elementen, eine kraftschwellenabhängig Zuschaltung der Antriebseinheit bzw. des Unterstützungsbetriebs realisieren. Besonders vorteilhaft wird durch diesen Mechanismus aber auch eine Objekterkennung zwischen den Hebel- bzw. Griffelementen realisiert, da bei Anordnung eines Objektes zwischen den Hebel- bzw. Griffelementen, unabhängig von der aufgebrachten Handkraft, keine Verlagerung von Griffelement und Schneidelement um den gemeinsamen Drehpunkt stattfinden kann. Insofern können dadurch Quetschungen der Bedienerhand, eines Fingers oder dergleichen vermieden werden. Der Unterstützungsbetrieb bleibt aus. Eine Überlastung oder Schädigung der Schneidvorrichtung wird vermieden. Es ist aber auch vorstellbar, dass ein Objekterkennungssensor zwischen den Hebel- bzw. Griffelementen angebracht ist, beispielsweise ein visueller, taktiler, oder Annährungs-Sensor. Eine derartige Anordnung ist ebenfalls der hiesigen Anmeldung vgl. Fig. 9 zu entnehmen.

Wie beispielsweise der DE102016211975A1 (vgl. Fig. 2, Griffelemente 16, 18), DE102010016296B4 (BZ 2, 6, 13 Scherenhälfte, Handgriff, Akkumulator Fig. 1-2) oder FR2462094 (BZ 6, 6' Fig. 1, 2) zu entnehmen ist, bauen Schneidvorrichtung, insbesondere Gartenscheren, durch die Vorsehung einer Handkraftunterstützung und die dadurch erforderlichen Antriebselemente, welche in den Hebel- bzw. Griffelementen untergebracht sein können, typischerweise etwas dicker. Insbesondere eines- oder beide Hebel- oder Griffelemente werden deshalb dicker, weil sie die Antriebsstrangelemente, Batterien, Steuerungselemente, Sensoren oder dergleichen aufnehmen müssen. Weil die Hebel- oder Griffelemente dadurch insbesondere auch in Schwenkrichtung breiter bzw. dicker werden, verringert sich der freie Schwenkwinkel der Schneidvorrichtung bezogen auf ein konstantes Handmaß. Zum ergonomisch sinnvollen Betrieb bzw. einer ergonomisch sinnvollen Ausgestaltung einer Gartenschere, muss diese nämlich für unterschiedliche Hände, maximal jedoch für große menschliche Hände ausgestaltet sein. Damit ist der maximale äußere Abstand der Griffelemente gewissermaßen vorgegeben. Um gerade bei derartigen Schneidvorrichtungen weiterhin große Öffnungswinkel der Schneidelemente zu ermöglichen, insbesondere Öffnungswinkel wie bei rein mechanischen (schlanken) Schneidvorrichtungen. Dadurch, dass erfindungsgemäß eine Verlagerung der Hebelelemente um einen ersten Winkel, eine Verlagerung der Schneidelemente um einen zweiten Winkel bewirkt, wobei der zweite Winkel größer als der erste Winkel ist, bzw. durch eine Übersetzung ins Schnelle, kann eine Schneidvorrichtung mit Antriebseinheit, insbesondere Schneidvorrichtung mit in den Hebel- und/oder Griffelementen integrierten Antriebsstrang und/oder Energieversorgungskomponenten, auch verhältnismäßig große Öffnungswinkel der Schneidelemente realisieren. Die Antriebseinheit kann außerdem die an den Hebelelementen anliegenden höheren Kräfte kompensieren, welche durch die Übersetzung ins Schnelle hervorgerufen werden, insbesondere gegenüber einer Übersetzung von i ≥ 1 bei konventionellen Schneidvorrichtungen. Konventionelle Schneidvorrichtungen erzielen nämlich entweder durch verhältnismäßig lange Hebelelemente gegenüber den Schneidelementen, durch Übersetzungsmechanismen ins Langsame und/oder durch eine Begrenzung des Öffnungswinkels der Schneidelemente eine für den Anwender einfach und komfortabel zu verwendenden Schneidvorrichtung, insbesondere Garten- oder Astschere. Insofern wird durch die Übersetzung ins Schnelle, in Verbindung mit einer insbesondere zuschaltbaren, besonders bevorzugt automatisch zuschaltenden Antriebskraftunterstützung bzw. einem Unterstützungsbetrieb, ein synergetischer Vorteil erzielt. Außerdem sind bei gleichen geometrischen Abmessungen der Schneidvorrichtung gegenüber insbesondere nicht motorisch unterstützten Schneidvorrichtungen komfortabel noch größere Öffnungswinkel der Schneidelemente realisierbar. Der Einsatzbereich der Schneidvorrichtung insbesondere der Garten- bzw. Astschere kann dadurch vergrößert werden. Auf Sägen für dickere Äste kann mitunter verzichtet werden. Vorteilhaft können Öffnungswinkel der Schneidelemente von >45°, insbesondere >55°, bevorzugt >65° realisiert werden.

Es wird vorgeschlagen, dass die Antriebseinheit dazu vorgesehen ist eine Bewegung des zweiten Hebelelements, insbesondere zweiten Griffelements relativ zu dem ersten Hebelelement, insbesondere ersten Griffelement zumindest zu unterstützen. Bezüglich möglicher Ausgestaltungen sei auf die DE102015206959A1 (vgl. insb. Fig. 1, 2, 8-18), DE102016211975A1 (vgl. insb. Fig. 2-5), DE102010016296B4 (vgl. insb. Fig. 1-4), WO2008023117A2 (vgl. insb. Fig. 1, 2a, 2b, 4) verwiesen. Damit soll hinreichend offenbart sein, wie ein Mechanismus zum Kraftunterstützungsbetrieb an einer Schneidvorrichtung, insbesondere einer Ast- oder Gartenschere zu realisieren ist. Ebenso soll insbesondere durch die Beschreibung der DE102010016296B4 hinreichend offenbart sein wie eine insbesondere kraftschwellwertveränderliche oder kraftproportionalveränderliche Schneidvorrichtung realisiert werden kann.

Es wird vorgeschlagen, dass die motorische Antriebseinheit zumindest mittelbar das Getriebe und/oder den Verbinder, als Zahnrad ausgebildeten Verbinder, antreibt. Dadurch können zusätzliche Bauteile eingespart werden. Die Komplexität bzw. Teilezahl der Schneidvorrichtung kann reduziert werden.

Es wird vorgeschlagen, dass die Kraftübertragung der Antriebseinheit mittels eines Linearantriebs, eines Gestänges, eines Getriebes, eines Seilzugs, einer Seilwinde, einer Reibrolle oder dergleichen, und/oder anderen form- oder reibschlüssigen Dreh- oder Linearantrieben oder dergleichen erfolgt. Beispielhaft kann die Antriebseinheit dazu eine Seilwinde antreiben die ein zwischen den Hebelelementen aufgespanntes Seil antreibt, insbesondere eine über einen Seilzug zwischen den Hebelelementen aufgespanntes Seil. Das Seil kann in einer Öffnungsfeder zum Öffnen der Hebel- bzw. Schneidelemente untergebracht sein. Durch die Öffnungsfeder kann eine Rückstellung des Seils, erfolgen.

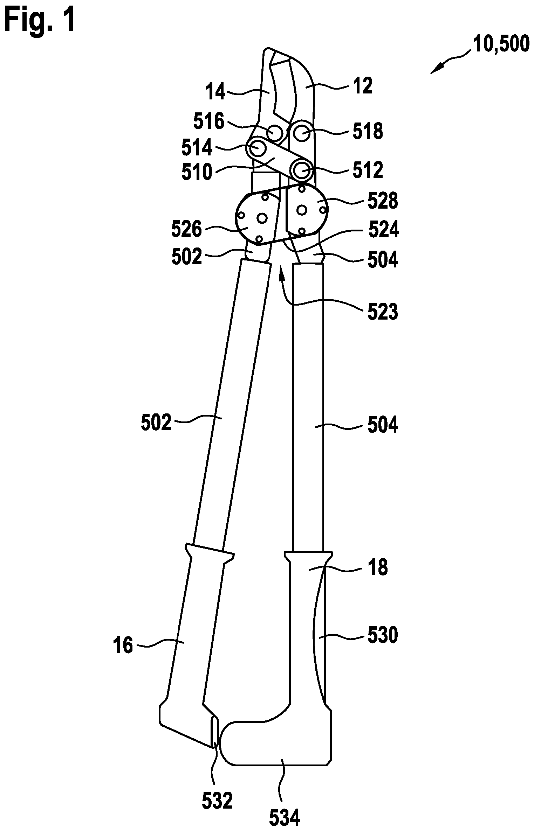

Es wird vorgeschlagen, dass die Schneidvorrichtung eine Kupplungseinheit zur Veränderung und/oder Entkoppelung der Übersetzung i < 1 und/oder Entkoppelung der Antriebseinheit, insbesondere eine selbstschaltende Kupplungseinheit aufweist. Eine selbstschaltende Kupplungseinheit zur Entkoppelung der Antriebseinheit bzw. zur Anwendung in einer erfindungsgemäßen Schneidvorrichtung ist beispielsweise in der DE102015206959A1 oder DE102016211975A1 beschreiben. Darüber hinaus kann aber auch eine Kupplungseinheit zur Veränderung bzw. Entkoppelung der Übersetzung ins Schnelle vorgesehen sein. Diese kann beispielsweise durch eine Vorrichtung zur Verlagerung der Drehpunkte des Verbinders erfolgen, so dass ein Verhältnis i=1 und i<1 realisierbar ist, oder i<1 sowie i≥1. Ggf. sind dazu Rastpositionen, ein Schieber und/oder Indikatoren vorgesehen. Damit kann vorteilhaft ein reiner Handbetrieb, ein Betrieb mit unterschiedlichen Momenten- bzw. Öffnungswinkelverhältnissen etc. realisiert werden. Der Einsatzbereich der Schneidvorrichtung kann erweitert werden. Eine Kupplungseinheit zur Veränderung des Übersetzungsverhältnisses kann beispielsweise derart realisiert werden, dass in einem Verbinder, insbesondere in dem Verbinder und/oder an einem der Hebelelemente oder Schneidelemente mit denen der Verbinder verbunden ist (vgl. insbesondere den Verbinder Fig. 1) ein Langloch vorgesehen ist, indem der Drehpunkt und/oder beide Drehpunkte veränderbar bzw. verschiebbar, insbesondere veränderbar bzw. verschiebbar feststellbar, ausgebildet sind.

Es wird eine Schneidvorrichtung vorgeschlagen, aufweisend ein Verlängerungselement, insbesondere ein teleskopierbares Verlängerungselement, mit zumindest einem Griffelement, wobei das Verlängerungselement zumindest mit einem der Hebelelemente verbunden ist oder es ausbildet, insbesondere ferner aufweisend eine Ansteuervorrichtung und/oder Bewegungsmimik zum Ansteuern und/oder Bewegen einer Antriebseinheit. Dadurch kann ein Hochentaster realisiert werden. Es wird ermöglicht die Schneidvorrichtung mit nur einer Hand zu betreiben. Eine Erreichbarkeit ferner Äste bzw. zu schneidender Gegenstände wird verbessert. Die Zugänglichkeit und Vielseitigkeit der Schneidvorrichtung kann insbesondere dadurch erhöht werden, dass ein Griffelement mitunter auch ein Teil des Hebelelements abnehmbar ist (vgl. insbesondere Fig. 1 und 2).

Es wird vorgeschlagen, dass die Schneidevorrichtung zumindest einen Kraftsensor zur Erfassung einer auf die Schneidelemente und/oder die Hebelelemente und/oder zumindest eines der Griffelemente und/oder den Verbinder wirkenden Kraft aufweist, insbesondere wobei die Schneidvorrichtung bei Überschreitung einer definierten Kraft eine Antriebseinheit, einem Schließund/oder Öffnungsmechanismus der Schneidevorrichtung, zuschaltet.

Ferner wird eine Schneidevorrichtung vorgeschlagen, aufweisend einen Sensor zur Erkennung eines Objekts zwischen den Hebelelementen zur Abschaltung eines Unterstützungsbetriebs und/oder zumindest zur Ausgabe eines Warnhinweises, insbesondere an einen Benutzer. Damit kann die Sicherheit der Schneidvorrichtung gesteigert werden.

Des Weiteren wird ein Verfahren zu einem Betrieb der vorgenannten Schneidevorrichtung vorgeschlagen, wobei bei Überschreitung einer definierten Bedienerkraft die Antriebseinheit einem Schließmechanismus der Schneidevorrichtung zugeschaltet wird.

### Zeichnungen

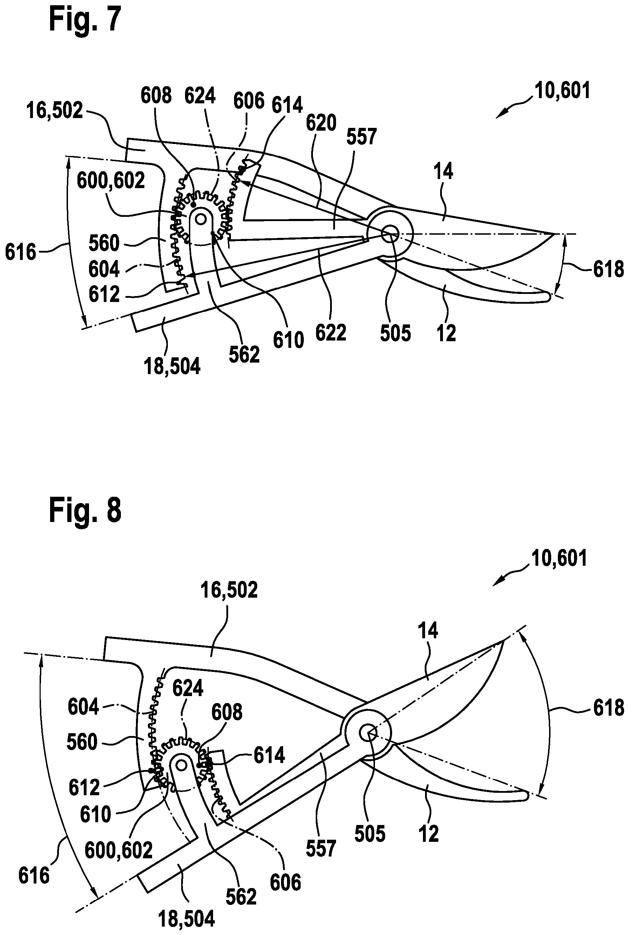

Nachfolgend wird die Erfindung anhand von in den Zeichnungen in Fig.7 bis Fig.9 dargestellte Ausführungsform näher erläutert. Die anderen Zeichnungen sind nicht erfindungsgemäß und dienen nur der Veranschaulichung. Die gezeigten Mechanismen zur Übersetzung i < 1 einer Bewegung der Hebelelemente relativ zu einer Bewegung der Schneidelemente ins Schnelle sind auf verschiedene Schneidvorrichtungen anwendbar, insbesondere auf Ast-, Reb- oder Gartenscheren, sowie Entaster oder Hochentaster.

Es zeigen:
- Fig. 1: eine Schneidvorrichtung in Form einer Astschere;
- Fig. 2: die Astschere gemäß Fig. 1 mit einem abgenommenen Griffelement;
- Fig. 3: einen vergrößerten Ausschnitt der Schneidvorrichtung nach Fig. 1 und 2;
- Fig. 4: den vergrößerten Ausschnitt gemäß Fig. 3 wobei die Schneid- und Hebelelemente geöffnet sind;
- Fig. 5: eine Schneidvorrichtung in Form einer Gartenschere in einer Ausführungsform - geschlossen;
- Fig. 6: die Schneidvorrichtung nach Fig. 5 - geöffnet;
- Fig. 7: eine Schneidvorrichtung in Form einer Gartenschere oder zumindest einen Schneidkopf einer Schneidvorrichtung in die erfindungsgemäßen Ausführungsform - halb geöffnet;
- Fig. 8: die Schneidvorrichtung nach Fig. 7 - geöffnet;
- Fig. 9: einen beispielhaften Antriebsmechanismus aufweisend eine Antriebseinheit in Verbindung mit dem Schneidkopf gemäß Fig. 7 und 8.

Fig. 1 und 2 zeigt eine Schneidvorrichtung 10 in Form einer Astschere 500. Sie weist ein erstes und ein zweites relativ zueinander bewegbares Schneidelement 12, 14 und ein erstes und ein zweites relativ zueinander bewegbares Hebelelement 502, 504, insbesondere Griffelement 16, 18, zum Öffnen und Schließen der Schneidelemente 12, 14 auf. Erfindungsgemäß führt eine Verlagerung der Hebelelemente 502, 504 um einen ersten Winkel 506 zu einer Verlagerung der Schneidelemente 12, 14 um einen zweiten Winkel 508, wobei der zweite Winkel 508 größer als der erste Winkel 506 ist. Von den Hebelelementen 502, 504 auf die Schneidelemente 12,14 liegt also eine Übersetzung ins Schnelle vor. Ein Übersetzungsverhältnis des Übersetzungsmechanismus bzw. des Getriebes ist somit i < 1. Im vorliegenden Beispiel beträgt der erste Winkel 506 rund 40° und der zweite Winkel 508 rund 50°. Bei einem Öffnen oder Schließen der Hebelelemente 502, 504, um einen Öffnungs- bzw. Schließwinkel 506, ist also der Öffnungs- bzw. Schließwinkel 508 der Schneidelemente 12, 14 verhältnismäßig größer als der Öffnungswinkel 506 der Hebelelemente 502, 504. Das an den Hebelelementen 502,504 aufzubringende Moment bzw. die erforderliche Kraft zur Durchtrennung eines zu schneidenden Gegenstands, wird damit gegenüber herkömmlichen Schneidvorrichtungen mit gleichen Abmessungen aber einer Übersetzung mit i≥1 vergrößert. Vorteilhafterweise kann dadurch ein Öffnungswinkel der Hebelelemente 502, 504 bzw. der Griffelemente 16, 18 gegenüber einem Öffnungswinkel der Schneidelemente 12, 14 verringert werden, insbesondere um die Zugänglichkeit zu Ästen innerhalb von Bäumen, Hecken oder anderen zu schneidenden Gegenständen zu verbessern. Oftmals ist dort nämlich die Bewegungsfreiheit begrenzt und die mitunter langen Hebel- bzw. Griffelemente 16, 18, 502, 504 können nur bedingt geöffnet werden. Mit der erfindungsgemäßen Vorrichtung kann aber trotz begrenztem Öffnungswinkel 506 der Hebel- bzw. Griffelemente 16, 18, 502, 504 ein verhältnismäßig großer Ast bzw. zu schneidender Gegenstand, durchtrennt werden, bzw. ein verhältnismäßig großer Öffnungswinkel 508 der Schneidelemente 12, 14 erzielt werden. Herkömmliche Schneidvorrichtungen beispielsweise Astscheren, weisen demgegenüber entweder eine direkte Übersetzung (i = 1) oder eine Übersetzung ins Langsame auf (also i > 1), so dass die zum Schließen der Hebel- bzw. Griffelemente 16, 18, 502, 504 erforderliche Kraft möglichst gering ist - mit dem Nachteil, dass dadurch jedoch die Zugänglichkeit bei beengten Platzverhältnissen eingeschränkt ist, so dass mitunter insbesondere dickere zu schneidende Gegenstände nicht zwischen den Schneidelementen 12, 14 positioniert werden können. Erfindungsgemäß sind Winkelverhältnisse möglich, bei denen der zweite Öffnungswinkel 508 größer als der erste Öffnungswinkel 506 ist, insbesondere wobei der zweite Öffnungswinkel 508 rund eineinhalb bis dreimal größer, bevorzugt doppelt so groß ist, wie der erste Öffnungswinkel 506. Der zweite Öffnungswinkel 508 ist insbesondere >45°, bevorzugt >55°, besonders bevorzugt >65°.

Gemäß den Fig. 1 bis 4 wird die Übersetzung ins Schnelle beispielhaft ermöglicht durch eine Vorrichtung zur Kraftübertragung, insbesondere einen Verbinder 510, 552. Dieser ist zur Bewegungsübertragung einer Bewegung des zweiten Hebelelements 504 relativ zum ersten Hebelelement 502 auf das zweite Schneidelement 14 relativ zum ersten Schneidelement 12 vorgesehen. Das Übersetzungsverhältnis des Verbinders 510 bzw. des Getriebes beträgt dabei i<1. Zur Erzeugung der Übersetzung i<1 ist die Hebelarmlänge 520 mit der der Verbinder 510, insbesondere ein Drehpunkt 512 des Verbinders 510, gegenüber einem Drehpunkt 518 der Hebelelemente 502, 504 positioniert ist, größer, als die Hebelarmlänge 522, mit der der Verbinder 510, insbesondere ein weiterer Drehpunkt 514 des Verbinders 510, gegenüber einem Drehpunkt 516 der Schneidelemente 12,14 positioniert ist. Die Drehpunkte 512, 514 des Verbinders 510 sind typischerweise in gegenüberliegenden Endbereichen des Verbinders 510 angeordnet. Vorstellbar ist hier, beispielsweise, dass die Drehpunkte 512, 514 verstellbar, beispielsweise in Langlöchern mit Rastpositionen oder dergleichen verstellbar ausgebildet sind. Dadurch ließen sich unterschiedliche Übersetzungsverhältnisse ermöglichen, insbesondere könnte ein Anwender in Abhängigkeit der Zugänglichkeit eines zu schneidenden Gegenstands damit den Öffnungswinkel der Hebelelemente 502, 504 verändern.

Fig. 1, 2 offenbaren darüber hinaus exemplarisch aber auch einen Seilzug 524.

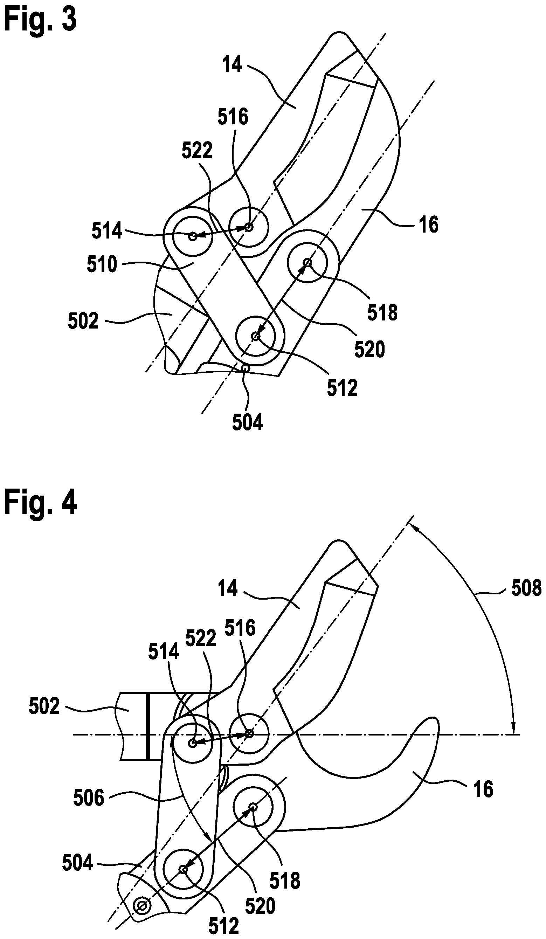

Der Seilzug 524 ist zwischen Umlenkvorrichtungen 526, 528 insbesondere Umlenkrollen aufgespannt. Am ersten und zweiten Hebelelement 502, 504 ist je eine Umlenkvorrichtung angeordnet. Der Seilzug 524 kann auch mehrfach zurückgeführt sein, beispielweise um zusätzliche Umlenkrollen, wodurch das Übersetzungsverhältnis vergrößert wird. Der Seilzug 524 wird von einer nicht dargestellten Seilwinde oder einem Linearantrieb angetrieben, welcher durch eine Antriebseinheit, insbesondere eine pneumatisch, hydraulisch, elektromotorische Antriebseinheit oder andere Antriebsvorrichtung oder dergleichen angetrieben ist. Als beispielhafter Mechanismus sei hier auf die Fig. 3 - 5 der DE 102016211975A1 verwiesen. Ein in einem Griffelement 16 untergebrachter Antriebseinheit 20 (Motor) treibt hier über eine Getriebeeinheit 38 und eine Kupplungseinheit 22 eine Seilwinde 32 an, die über ein Antriebskraftübertragungselement 340 in Form eines Seils 34 das andere Griffelement 18 verlagert.

Derartige Antriebsstrangkomponenten sind in der Figur 1 und 2 im Hebelelement und/oder Griffelement 18, 504 untergebracht. Das oder die Griffelemente 16, 18 weisen einen, je einen oder mehrere (Hand-)kraftsensor(en) 530 auf. Der oder die (Hand-)kraftsensor(en) 530 erfasst eine auf die Griffelement 16, 18 ausgeübte Kraft. In Abhängigkeit der Kraft und/oder einer Kraftschwelle wird zumindest ein Unterstützungsbetrieb zugeschaltete. Der Unterstützungsbetrieb lässt sich proportional zur Kraft oder in Abhängigkeit einer Kraftschwelle zuschalten. Die Sensitivität des Sensors oder die Menge der Kraftunterstützung ist vorteilhaft einstellbar ausgebildet, beispielsweise über ein Einstellrad, -Schieber, Schalter, Potentiometer oder dergleichen. Ebenso kann die Kraftunterstützung, insbesondere die zur erfassten Kraft proportionale Kraftunterstützung, in diskreten Stufen oder stufenlos einstellbar ausgebildet sein. Am Griffelement 18 ist ferner ein Akkumulator 534 angeordnet. Zwischen den Griffelementen 16, 18 (oder auch zwischen den Hebelelementen 502, 504) kann ein Anschlagsensor 532 angeordnet sein, um ein Abschalten der Antriebseinheit zu veranlassen, wenn die Griffelemente 16,18 Ihre Endposition erreicht haben. Aus dem Vergleich von Fig. 1 und 2, ist zudem ersichtlich, dass das Griffelement 16 abnehmbar ausgebildet ist. Dadurch kann aus der Astschere 500 eine Hochentaster 536 gemacht werden, bzw. eine Astschere 500 mit nur einem Arm bzw. Griffelement 18. Der Hochentaster 536 ist aktivierbar über ein Betätigen des Griffelements 18 bzw. ein komprimieren des Handkraftsensors 530. Eine nicht dargestellte Öffnungsfeder, welche zwischen den Hebelelementen 502 und 504 wirken kann, kann die Schneidelemente 12, 14 öffnen, der Seilzug 524 diese wieder schließen.

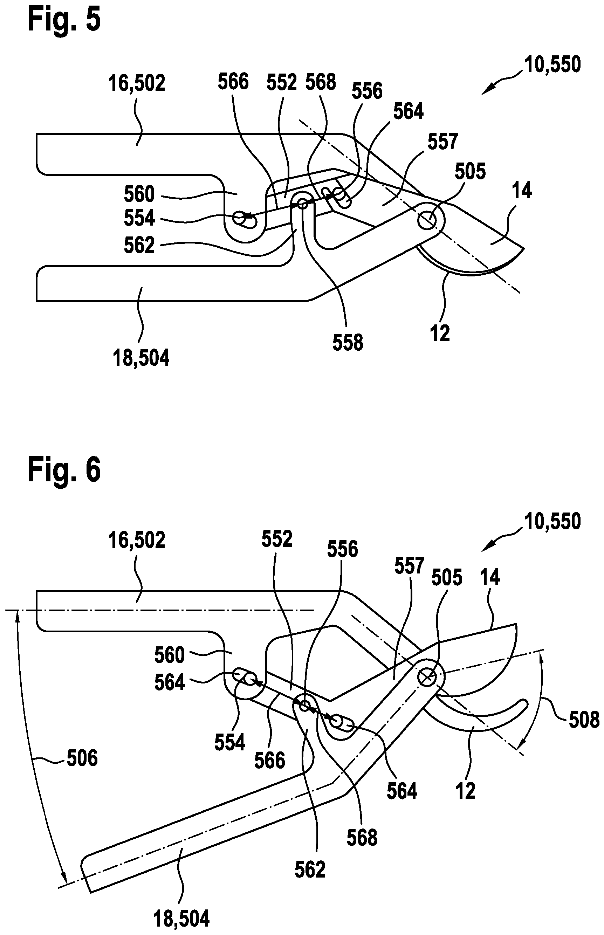

Eine alternative Ausgestaltung der Schneidvorrichtung 10 in Form einer Gartenschere 550 ist in Fig. 5 und 6 dargestellt - in einer geschlossenen und in einer geöffneten Position der Schneidelemente 12, 14, - wobei die Schneidvorrichtung 10 in der geöffneten Position zur Aufnahme eines Schnittguts (nicht dargestellt) vorgesehen ist. Die Schneidvorrichtung 10 bzw. Gartenschere 550 weist ein erstes und ein zweites relativ zueinander bewegbares Schneidelement 12, 14 und ein erstes und ein zweites relativ zueinander bewegbares Hebelelement 502, 504, insbesondere Griffelement 16, 18, zum Öffnen und Schließen der Schneidelemente 12, 14 auf. Die Schneidelemente 12, 14 und die Hebelelemente 502, 504 weisen einen gemeinsamen Drehpunkt 505 auf. Eine Verlagerung der Hebelelemente 502, 504 um einen ersten Winkel 506 führt zu einer Verlagerung der Schneidelemente 12, 14 um einen zweiten Winkel 508, wobei der zweite Winkel 508 größer als der erste Winkel 506 ist. Im vorliegenden Beispiel beträgt der erste Verlagerungs-Winkel 506 (der Hebelelemente 502, 504) rund 20° während der korrespondierende zweite Verlagerungs-Winkel 508 (der Schneidelemente 12, 14) rund 50° beträgt. Auch hier sind durch Veränderung der Hebellängen oder anderer, an der Erzeugung der Übersetzung beteiligter Bauteile, auch andere Übersetzungsverhältnisse von den Hebelelementen 502, 504 auf die Schneidelemente 12, 14 ins Schnelle (i<1) möglich. Ebenso wie in Fig. 3 und 4 ist auch hier eine Vorrichtung zur Kraftübertragung, insbesondere ein Verbinder 552, zur Übersetzung ins Schnelle vorgesehen. Dieser ist zur Bewegungsübertragung einer Bewegung des zweiten Hebelarms 504 relativ zum ersten Hebelelement 502, auf das zweite Schneidelement 14 relativ zum ersten Schneidelement 12 vorgesehen. Zur Erzeugung der Übersetzung i<1 ist der Verbinder 552 als eine Art Wippe ausgestaltet. Ein erstes Ende 554 des Verbinders 552 ist mit dem ersten Hebelelement 502 drehbar verbunden, ein zweites Ende 556 des Verbinders 552 ist mit dem zweiten Schneidelement 14 drehbar verbunden, insbesondere einem Hebelarm 557 des zweiten Schneidelements 14. Der Hebelarm 557 erstreckt sich zur Gegenseite des Schneidelements 14 bezogen auf den Drehpunkt 505 der Schneidelemente 12, 14. In einem mittleren Bereich 558 des Verbinders 552 ist dieser drehbar mit dem zweiten Hebelelement 504 verbunden. Auch hier können sich die Hebelarmlängen 566, 568 unterscheiden, insbesondere in der Form, dass die Hebelarmlänge 566 zwischen dem ersten Hebelelement 502 und dem zweiten Hebelelement 504 größer ist, als die Hebelarmlänge 568 zwischen dem zweiten Hebelelement 504 und dem zweiten Schneidelement 14. Im vorliegenden Beispiel beträgt dieses Hebelarmlängenverhältnis etwa 1,65 und kann selbstverständlich konstruktiv auch anders gewählt werden. Um eine Verkippung des Verbinders 552 um den mittleren Bereich 558 bzw. die Drehaufnahme am zweiten Hebelelement 504 zu ermöglichen sind die beiden Enden 554, 556 des Verbinders 552 in Langlöchern 564 des ersten Hebelelements 502 bzw. des zweiten Schneidelements 14 drehbar und längsverschiebbar aufgenommen. Zur Vermeidung von Bauteilkollisionen ist das Ende 554 des Verbinders 552 und der mittlere Bereich 558 bzw. die korrespondierenden Drehaufnahmen an Beabstandern 560, 562 aufgenommen, bzw. über Beabstander 560, 562 mit dem ersten bzw. zweiten Hebelelement 502, 504 verbunden. Die Beabstander 560, 562 sind im vorliegenden Beispiel einstückig mit den Hebelelementen 502, 504 ausgebildet. Ein Öffnen bzw. Schließen der Hebelelemente 502, 504 um den Drehpunkt 505 um einen Winkel von 20° führt exemplarisch zu einer Verlagerung bzw. Rotation des Verbinders 552 um rund 55° um den mittleren Bereich 558 bzw. die dortige Drehaufnahme. Dies wiederum bewirkt eine Verlagerung des zweiten Schneidelements 14 relativ zum ersten Schneidelement 12 um rund 55°.

In Abhängigkeit der Hebelverhältnisse und geometrischen Anordnung lassen sich mit diesem Prinzip selbstverständlich auch andere Übersetzungsverhältnisse ins Langsame i<1 realisieren.

Erfindungsgemäß ist die Schneidvorrichtung 10 in Form einer Gartenschere 601 ist der Fig. 7 und 8 zu entnehmen. Der Aufbau hat eine gewisse Ähnlichkeit zu dem Aufbau aus Fig. 5 und 6, weshalb Gleichteile oder zumindest funktional ähnliche Bauteile teils nicht nochmals erläutert, sondern nur mit identischen Bezugszeichen versehen sind. Als Verbinder 600 fungiert hier ein Zahnrad 602. Das Zahnrad 602 ist drehbar am zweiten Hebelelement 504, bzw. dem Beabstander 562 des zweiten Hebelelements 504 aufgenommen. Das Zahnrad 602 stützt sich einerseits an einem verzahnten Abschnitt 604 des ersten Hebelelements 502 bzw. einem verzahnten Abschnitt 604 des Beabstanders 560 des ersten Hebelelements 502 ab und wird andererseits an einem verzahnten Abschnitt 606 des zweiten Schneidelements 14, bzw. einem verzahnten Abschnitt 606 des Hebelarms 557 des zweiten Schneidelements 14, abgestützt. Die verzahnten Abschnitte 604, 606 sind als teilkreisförmige Abschnitte ausgebildet, welche in etwa einen Wälzkreisdurchmesser aufweisen die dem doppeltem des minimalen bzw. maximalen radialen Abstands 620, 622 des Drehpunkts 505 der Hebel- bzw. Schneidelemente 12, 14, 502, 504 vom Wälzkreis 624 des Zahnrads 602 entspricht. An dem Zahnrad 602 und den verzahnten Abschnitten 604, 606 sind zur Kennzeichnung Visualisierungspunkte 608, 610, 612, 614 angebracht, welche die Lage bzw. Verdrehung des Zahnrades 602 relativ zu den verzahnten Abschnitten 604, 606 bei einer Verlagerung der Hebelelemente 502, 504 bzw. der Griffelemente 16, 18 um einen Verlagerungswinkel (Fig. 7 ggü. Fig. 8) zueinander kenntlich machen. In Fig. 7 weisen die Griff- bzw. Hebelelement 16, 18, 502, 504 einen Öffnungswinkel 616 von 22°, in Fig. 8 von 38° auf. Demgegenüber weisen die Schneidelemente 12, 14 in der Fig. 7 einen Öffnungswinkel 618 von 20° und der Fig. 8 von rund 55° auf. Dies entspricht einem Öffnungswinkelunterschied bzw. einem Übersetzungsverhältnis von i=16°/35° also rund i~0,45. Durch entsprechende Anordnungsveränderung kann selbstverständlich auch hier das Übersetzungsverhältnis i<1 verändert werden.

Fig. 9 zeigt exemplarisch eine Integration der Gartenschere 601 in eine motorisch unterstützende Schneidvorrichtung 10, 650. Diese Schneidvorrichtung lehnt sich an die Schneidvorrichtung der DE 102016211975A1, vgl. insbesondere Fig. 3 - 5 an. Sie weist demnach eine in einem Griffelement 16 untergebrachte Antriebseinheit 20 (Motor) auf. Diese treibt über eine Getriebeeinheit 38 und eine insbesondere selbstschaltende Kupplungseinheit 22 eine Seilwinde 32 an, die über ein Antriebskraftübertragungselement 340 in Form eines Seils 34 das andere Griffelement 18 verlagert. Das Antriebskraftübertragungselement 340 ist in einer Öffnungsfeder 50 geführt. Im zweiten Griffelement 18 ist zudem ein Akkumulator 54 untergebracht. Die Antriebsstrangkomponenten (Motor, Getriebe etc.) sowie der Akkumulator verdicken die Griffelemente 16, 18 und verringern dadurch den Öffnungswinkel zwischen geschlossener und geöffneter Schneidvorrichtung 10. Deshalb kommt hier beispielhaft die Schneidvorrichtung nach Fig. 8 zur Integration. Das erste Hebelelement 502 ist im ersten Handgriff 16 verankert, das zweite Hebelelement 504 ist über das Kraftübertragungselement 800 bzw. den Hebel 80 mit dem zweiten Griffelement 18 verbunden. Die Schneidvorrichtung 650 ermöglicht einen Kraftunterstützungsbetrieb. Bezüglich der Details zu deren Umsetzung sei auf die Ausführungen der Figuren und Figurenbeschreibung der DE 102016211975A1 verwiesen.

## Patentansprüche

1. Schneidvorrichtung (10), insbesondere Gartenschneidvorrichtung, mit einem ersten und einem zweiten relativ zueinander bewegbaren Schneidelement (12, 14), mit einem ersten und einem zweiten relativ zueinander bewegbaren Hebelelement (502, 504), insbesondere Griffelement (16, 18), zum Öffnen und Schließen der Schneidelemente (12, 14), wobei ein Schließen der Hebelelemente (502, 504), insbesondere Griffelemente (16, 18), ein Schließen der Schneidelemente (12, 14) bewirkt, wobei eine Verlagerung der Hebelelemente (502, 504) um einen ersten Winkel (506), eine Verlagerung der Schneidelemente (12, 14) um einen zweiten Winkel (508) bewirkt, wobei der zweite Winkel (508) eineinhalb bis dreimal größer, bevorzugt doppelt so groß, als der erste Winkel (506) ist, ferner aufweisend ein Getriebe und/oder einen Verbinder (510, 552, 600), der eine Übersetzung i < 1 einer Bewegung der Hebelelemente (502, 504) relativ zu einer Bewegung der Schneidelemente (12, 14) bewirkt, insbesondere eine Übersetzung ins Schnelle, **dadurch gekennzeichnet, dass** der Verbinder (600) ein Zahnrad (602) ist, wobei das Zahnrad (602) drehbar am zweiten Hebelelement (504) aufgenommen ist und sich einerseits an einem verzahnten Abschnitt (604) des ersten Hebelelements (502) und andererseits an einem verzahnten Abschnitt (606) des zweiten Schneidelements (14) abgestützt.

2. Schneidvorrichtung (10) zumindest nach Anspruch 1, aufweisend eine insbesondere motorische Antriebseinheit (20), die in zumindest einem Betriebszustand dazu vorgesehen ist, eine Bewegung des zweiten Schneidelements (14) relativ zu dem ersten Schneidelement (12) zumindest zu unterstützen.

3. Schneidvorrichtung (10) zumindest nach Anspruch 2, **dadurch gekennzeichnet, dass** die Antriebseinheit (20) dazu vorgesehen ist eine Bewegung des zweiten Hebelelements (504), insbesondere zweiten Griffelements (18) relativ zu dem ersten Hebelelement (502), insbesondere ersten Griffelements (16) zumindest zu unterstützen.

4. Schneidvorrichtung (10) zumindest nach Anspruch 2 oder 3, **dadurch gekennzeichnet, dass** die motorische Antriebseinheit (20) zumindest mittelbar das Getriebe und/oder den als Zahnrad (602) ausgebildeten Verbinder (600) antreibt.

5. Schneidvorrichtung (10) zumindest nach Anspruch 2, **dadurch gekennzeichnet, dass** die Kraftübertragung der Antriebseinheit (20) mittels eines Linearantriebs, eines Gestänges, eines Getriebes, eines Seilzugs, einer Seilwinde, einer Reibrolle und/oder anderen form- oder reibschlüssigen Drehoder Linearantrieben oder dergleichen erfolgt.

6. Schneidvorrichtung (10) zumindest nach einem der vorhergehenden Ansprüche, aufweisend eine Kupplungseinheit (22) zur Veränderung und/oder Entkoppelung der Übersetzung i < 1 und/oder Entkoppelung der Antriebseinheit (20), insbesondere eine selbstschaltende Kupplungseinheit (22).

7. Schneidvorrichtung (10) zumindest nach einem der vorhergehenden Ansprüche, aufweisend ein Verlängerungselement (503), insbesondere ein teleskopierbares Verlängerungselement (503) mit zumindest einem Griffelement (18), wobei das Verlängerungselement (503) zumindest mit einem der Hebelelemente (504) verbunden ist oder es ausbildet, insbesondere ferner aufweisend eine Ansteuervorrichtung und/oder Bewegungsmimik zum Ansteuern und/oder Bewegen der Antriebseinheit (20) zumindest nach Anspruch 2.

8. Schneidevorrichtung nach einem der vorhergehenden Ansprüche, **gekennzeichnet durch** zumindest einen Kraftsensor (40, 530) zur Erfassung einer auf die Schneidelemente (12, 14) und/oder die Hebelelemente (502, 504) und/oder zumindest eines der Griffelemente (16, 18) und/oder den Verbinder (510) wirkenden Kraft, insbesondere wobei die Schneidvorrichtung (10) bei Überschreitung einer definierten Kraft eine Antriebseinheit (20), insbesondere die Antriebseinheit (20) nach Anspruch 2, einem Schließ und/oder Öffnungsmechanismus (523) der Schneidevorrichtung (10) zumindest zugeschaltet.

9. Schneidevorrichtung (10) nach einem der vorhergehenden Ansprüche, aufweisend einen Sensor zur Erkennung eines Objekts zwischen den Hebelelementen (502, 504) zur Abschaltung eines Unterstützungsbetriebs, insbesondere der Antriebseinheit (20) nach Anspruch 2, und/oder zumindest zur Ausgabe eines Warnhinweises.

10. Verfahren zu einem Betrieb einer Schneidevorrichtung (10a; 10b; 10c; 10d) zumindest nach Anspruch 8, **dadurch gekennzeichnet, dass** bei Überschreitung einer definierten Bedienerkraft die Antriebseinheit (20) einem Schließmechanismus (523) der Schneidevorrichtung (10) zugeschaltet wird.

11. Verfahren zu einem Betrieb einer Schneidvorrichtung (10) zumindest nach Anspruch 9, **dadurch gekennzeichnet, dass** bei Erkennung eines Objekts zwischen den Hebelelementen (502, 504) der Unterstützungsbetrieb abgeschaltet wird, insbesondere durch Abschalten der Antriebseinheit (20) nach Anspruch 2, und/oder zumindest ein Warnhinweis ausgegeben wird.

## Claims

1. Cutting device (10), in particular garden cutting device, having a first and a second cutting element (12, 14) that are movable relative to one another, having a first and a second lever element (502, 504), in particular handle element (16, 18), that are movable relative to one another and serve for opening and closing the cutting elements (12, 14), wherein closing of the lever elements (502, 504), in particular handle elements (16, 18), causes closing of the cutting elements (12, 14), wherein displacement of the lever elements (502, 504) through a first angle (506) causes displacement of the cutting elements (12, 14) through a second angle (508), wherein the second angle (508) is one and a half to three times larger than, preferably twice as large as, the first angle (506), further having a gear mechanism and/or a connector (510, 552, 600) which brings about a transmission ratio i < 1 of a movement of the lever elements (502, 504) relative to a movement of the cutting elements (12, 14), in particular a speed-increasing transmission ratio, **characterized in that** the connector (600) is a toothed wheel (602), wherein the toothed wheel (602) is held rotatably on the second lever element (504) and is supported against a toothed portion (604) of the first lever element (502) at one side and against a toothed portion (606) of the second cutting element (14) at the other side.

2. Cutting device (10) at least according to Claim 1, having an in particular motor-driven drive unit (20) which, in at least one operating state, is intended at least to assist a movement of the second cutting element (14) relative to the first cutting element (12).

3. Cutting device (10) at least according to Claim 2, **characterized in that** the drive unit (20) is intended at least to assist a movement of the second lever element (504), in particular second handle element (18), relative to the first lever element (502), in particular first handle element (16).

4. Cutting device (10) at least according to Claim 2 or 3, **characterized in that** the motor-driven drive unit (20) at least indirectly drives the gear mechanism and/or the connector (600) in the form of a toothed gear (602).

5. Cutting device (10) at least according to Claim 2, **characterized in that** the force transmission of the drive unit (20) is realized by means of a linear drive, a linkage, a gear mechanism, a cable pull, a cable winch, a friction roller and/or other form-fitting or frictionally engaging rotary or linear drives or the like.

6. Cutting device (10) at least according to one of the preceding claims, having a coupling unit (22) for changing and/or ceasing to apply the transmission ratio i < 1 and/or decoupling the drive unit (20), in particular a self-switching coupling unit (22).

7. Cutting device (10) at least according to one of the preceding claims, having an extension element (503), in particular a telescopic extension element (503), with at least one handle element (18), wherein the extension element (503) is connected at least to one of the lever elements (504) or forms it, in particular further having a control device and/or movement mimicking means for controlling and/or moving the drive unit (20) at least according to Claim 2.

8. Cutting device according to one of the preceding claims, **characterized by** at least one force sensor (40, 530) for sensing a force acting on the cutting elements (12, 14) and/or the lever elements (502, 504) and/or at least one of the handle elements (16, 18) and/or the connector (510), in particular wherein, if a defined force is exceeded, the cutting device (10) at least connects a drive unit (20), in particular the drive unit (20) according to Claim 2, to a closing and/or opening mechanism (523) of the cutting device (10).

9. Cutting device (10) according to one of the preceding claims, having a sensor for detecting an object between the lever elements (502, 504) for switching off assistance operation, in particular of the drive unit (20) according to Claim 2, and/or at least for outputting a warning.

10. Method for operating a cutting device (10a; 10b; 10c; 10d) at least according to Claim 8, **characterized in that**, if a defined operator force is exceeded, the drive unit (20) is connected to a closing mechanism (523) of the cutting device (10).

11. Method for operating a cutting device (10) at least according to Claim 9, **characterized in that**, if an object is detected between the lever elements (502, 504), the assistance operation is switched off, in particular by the drive unit (20) according to Claim 2 being switched off, and/or at least a warning is output.

## Revendications

1. Dispositif de coupe (10), en particulier dispositif de coupe de jardin, avec un premier et un deuxième éléments de coupe (12, 14) mobiles l'un par rapport à l'autre, avec un premier et un deuxième éléments levier (502, 504) mobiles l'un par rapport à l'autre, en particulier des éléments poignée (16, 18), pour ouvrir et fermer les éléments de coupe (12, 14), une fermeture des éléments levier (502, 504), en particulier des éléments poignée (16, 18), provoquant une fermeture des éléments de coupe (12, 14), un déplacement des éléments levier (502, 504) d'un premier angle (506), provoquant un déplacement des éléments de coupe (12, 14) d'un deuxième angle (508), le deuxième angle (508) étant une fois et demie à trois fois plus grand, de préférence deux fois plus grand, que le premier angle (506), comprenant en outre un engrenage et/ou un organe de liaison (510, 552, 600) qui provoque une conversion i < 1 d'un mouvement des éléments levier (502, 504) par rapport à un mouvement des éléments de coupe (12, 14), en particulier une conversion vers la rapidité, **caractérisé en ce que** l'organe de liaison (600) est une roue dentée (602), la roue dentée (602) étant reçue de manière rotative sur le deuxième élément levier (504) et s'appuyant d'une part sur une partie dentée (604) du premier élément levier (502) et d'autre part sur une partie dentée (606) du deuxième élément de coupe (14).

2. Dispositif de coupe (10) au moins selon la revendication 1, comportant une unité d'entraînement (20), notamment motorisée, qui est prévue, dans au moins un état de fonctionnement, pour au moins assister un mouvement du deuxième élément de coupe (14) par rapport au premier élément de coupe (12).

3. Dispositif de coupe (10) au moins selon la revendication 2, **caractérisé en ce que** l'unité d'entraînement (20) est prévue pour au moins assister un mouvement du deuxième élément levier (504), notamment du deuxième élément poignée (18) par rapport au premier élément levier (502), notamment du premier élément poignée (16).

4. Dispositif de coupe (10) au moins selon la revendication 2 ou la revendication 3, **caractérisé en ce que** l'unité d'entraînement motorisée (20) entraîne au moins indirectement l'engrenage et/ou l'organe de liaison (600) réalisé sous forme de roue dentée (602).

5. Dispositif de coupe (10) au moins selon la revendication 2, **caractérisé en ce que** la transmission de force de l'unité d'entraînement (20) s'effectue au moyen d'un entraînement linéaire, d'une tringlerie, d'un engrenage, d'un câble de traction, d'un treuil à câble, d'une poulie à friction et/ou d'autres entraînements rotatifs ou linéaires à engagement positif ou à friction ou similaires.

6. Dispositif de coupe (10) selon au moins l'une des revendications précédentes, présentant une unité de couplage (22) pour modifier et/ou découpler la conversion i < 1 et/ou découpler l'unité d'entraînement (20), en particulier une unité de couplage (22) à commutation automatique.

7. Dispositif de coupe (10) au moins selon l'une des revendications précédentes, comportant un élément d'extension (503), notamment un élément d'extension télescopique (503) comportant au moins un élément de préhension (18), l'élément d'extension (503) étant relié à, ou formant, au moins l'un des éléments levier (504), notamment comportant en outre un dispositif de commande et/ou de simulation de mouvement pour commander et/ou déplacer l'unité d'entraînement (20) selon au moins la revendication 2.

8. Dispositif de coupe selon l'une des revendications précédentes, **caractérisé par** au moins un capteur de force (40, 530) pour détecter une force agissant sur les éléments de coupe (12, 14) et/ou les éléments levier (502, 504) et/ou au moins l'un des éléments poignée (16, 18) et/ou l'organe de liaison (510), en particulier le dispositif de coupe (10), en cas de dépassement d'une force définie, connectant au moins une unité d'entraînement (20), en particulier l'unité d'entraînement (20) selon la revendication 2, à un mécanisme de fermeture et/ou d'ouverture (523) du dispositif de coupe (10).

9. Dispositif de coupe (10) selon l'une des revendications précédentes, comportant un capteur de détection d'un objet entre les éléments levier (502, 504) pour couper un fonctionnement d'assistance, notamment de l'unité d'entraînement (20) selon la revendication 2, et/ou au moins pour émettre un avertissement.

10. Procédé pour un fonctionnement d'un dispositif de coupe (10a ; 10b ; 10c ; 10d) au moins selon la revendication 8, **caractérisé en ce que**, en cas de dépassement d'une force d'opérateur définie, l'unité d'entraînement (20) est connectée à un mécanisme de verrouillage (523) du dispositif de coupe (10).

11. Procédé pour un fonctionnement d'un dispositif de coupe (10) au moins selon la revendication 9, **caractérisé en ce que**, en cas de détection d'un objet entre les éléments levier (502, 504), le fonctionnement d'assistance est arrêté, notamment par arrêt de l'unité d'entraînement (20) selon la revendication 2, et/ou au moins un avertissement est émis.
